(19) Europäisches Patentamt
European Patent Office
Office européen des brevets

(11) EP 0 743 965 B1

(12) **EUROPÄISCHE PATENTSCHRIFT**

(45) Veröffentlichungstag und Bekanntmachung des Hinweises auf die Patenterteilung:
**28.04.1999  Patentblatt 1999/17**

(21) Anmeldenummer: **95907005.3**

(22) Anmeldetag: **01.02.1995**

(51) Int Cl.⁶: **C08K 3/00**, C08L 101/00, C09J 201/00, C09J 133/06

(86) Internationale Anmeldenummer:
**PCT/EP95/00350**

(87) Internationale Veröffentlichungsnummer:
**WO 95/21884 (17.08.1995 Gazette 1995/35)**

(54) **VERWENDUNG EINES DISPERSIONSFUSSBODENKLEBERS**

USE OF A DISPERSION ADHESIVE FOR FLOOR COVERINGS

UTILISATION D'UNE COLLE A DISPERSION POUR REVETEMENTS DE SOL

(84) Benannte Vertragsstaaten:
**AT BE CH DE DK ES FR GB GR IE IT LI NL PT SE**

(30) Priorität: **11.02.1994  DE 4404411**

(43) Veröffentlichungstag der Anmeldung:
**27.11.1996  Patentblatt 1996/48**

(73) Patentinhaber: **BASF AKTIENGESELLSCHAFT**
**67056 Ludwigshafen (DE)**

(72) Erfinder:
• **FICKEISEN, Peter**
  **D-67246 Dirmstein (DE)**
• **AYDIN, Oral**
  **D-68165 Mannheim (DE)**
• **WISTUBA, Eckehardt**
  **D-67098 Bad Dürkheim (DE)**
• **SCHWERZEL, Thomas**
  **D-67149 Meckenheim (DE)**
• **FÜSSL, Rüdiger**
  **D-67435 Neustadt (DE)**
• **URBAN, Dieter**
  **D-67346 Speyer (DE)**

(56) Entgegenhaltungen:
EP-A- 0 220 841      EP-A- 0 490 191
EP-A- 0 649 894      DE-A- 3 720 860
DE-A- 4 141 168      US-A- 4 225 496

• DATABASE WPI Section Ch, Week 7536 Derwent Publications Ltd., London, GB; Class A81, AN 75-59432W & JP,A,50 013 428 ( TOA SYNTHETIC CHEM LTD) , 12.Februar 1975

**Beschreibung**

Die Erfindung betrifft die Verwendung einer wäßrigen Zusammensetzung, frei von organischen Lösungsmitteln, Weichmachern und zusätzlichen klebrigmachenden Harzen, enthaltend Wasser

| und 20 - 99 Gew.-% | eines Polymeren mit einer Glasübergangstemperatur unter -25°C, wobei das Polymere zu 60 bis 100 Gew.-% aus $C_1$-$C_{20}$-Alkyl(meth)acrylaten oder Mischungen dieser Monomeren aufgebaut ist, und |
| --- | --- |
| 1 - 80 Gew.-% | eines Füllstoffs, |

wobei sich die Gewichtsprozente auf die Summe der Bestandteile der wäßrigen Zusammensetzung mit Ausnahme von Wasser beziehen, als Fußbodenkleber, wobei der Fußbodenkleber einseitig auf den Untergrund aufgetragen wird.

Aus der EP-A-490 191 sind lösungsmittelfreie Fußbodenkleber auf Basis einer Acrylatdispersion bekannt. Die dort beschriebenen Fußbodenkleber enthalten zwingend ein klebrigmachendes Harz und einen Weichmacher.

Die DE-A-41 41 168 betrifft Kontaktkleberdispersionen von Vinylester-Acrylsäureestercopolymerisaten. Die Copolymerisate weisen eine Glasübergangstemperatur von -20 bis +20°C auf.

Aus der nicht vorveröffentlichten Patentanmeldung EP-A-649894 sind Fußbodenkleber bekannt, welche pflanzliche Öle oder Mineralöle enthalten, die Glasübergangstemperatur des Polymeren liegt vorzugsweise bei -35 bis -45°C.

Grundsätzlich ist es erwünscht, daß Klebstoffe möglichst wenig Mischungskomponenten aufweisen, um ihre Herstellung zu erleichtern und Kosten zu senken. Insbesondere sollen Klebstoffe frei sein von Bestandteilen, die bei der späteren Verwendung aus der Verklebung entweichen und zu unerwünschten Emissionen führen können.

Bei den anwendungstechnischen Eigenschaften ist im besonderen eine gute Klebrigkeit, z.B. ein gutes Naß- und Trockenanzugsvermögen, und eine gute Wärmestandfestigkeit der Verklebung erwünscht.

Aufgabe der vorliegenden Erfindung war daher die Verwendung von Klebstoffen mit den voranstehend genannten Eigenschaften als Fußbodenkleber.

Demgemäß wurde die eingangs definierte Verwendung gefunden.

Die verwendeten wäßrigen Zusammensetzungen enthalten vorzugsweise

| 30 bis 70 Gew.-%, | besonders bevorzugt 40 bis 60 Gew.-% des Polymeren mit einer Glasübergangstemperatur unter -25°C, |
| --- | --- |
| 30 bis 70 Gew.-%, | besonders bevorzugt 40 bis 60 Gew.-% eines Füllstoffs. |

Die Gewichtsprozente beziehen sich dabei auf die Summe der Komponenten der wäßrigen Zusammensetzung mit Ausnahme von Wasser, d.h. im wesentlichen den Festgehalt der Zubereitung.

Die $C_1$-$C_{20}$-Alkyl(meth)acrylate sind vorzugsweise zu 80 bis 100 Gew.-%, besonders bevorzugt 90 bis 99,8 Gew.-%, bezogen auf das Polymer, im Polymer enthalten.

Zu nennen sind z.B. (Meth)acrylsäurealkylester mit einem $C_1$-$C_{10}$-Alkylrest, wie Methylmethacrylat, Methylacrylat, n-Butylacrylat, Ethylacrylat und 2-Ethylhexylacrylat.

Insbesondere sind auch Mischungen der (Meth)acrylsäurealkylester geeignet.

Als weitere Monomere sind zu nennen:

Vinylester von Carbonsäuren mit 1 bis 20 C-Atomen, z.B. Vinyllaurat, -stearat, Vinylpropionat, Versaticsäurevinylester und Vinylacetat;

Vinylaromatische Verbindungen, z.B. Vinyltoluol, α- und p-Methylstyrol, α-Butylstyrol, 4-n-Butylstyrol, 4-n-Decylstyrol und vorzugsweise Styrol. Beispiele für Nitrile sind Acrylnitril und Methacrylnitril;

Vinylhalogenide, d.h. mit Chlor, Fluor oder Brom substituierte ethylenisch ungesättigte Verbindungen, bevorzugt Vinylchlorid und Vinylidenchlorid; und

nicht aromatische Kohlenwasserstoffe mit 2 bis 8 C-Atomen und mindestens zwei olefinischen Doppelbindungen, z.B. Butadien, Isopren, und Chloropren.

Weitere Monomere, die von 0 bis 40 Gew.-%, vorzugsweise von 0 bis 20 Gew.-% und besonders bevorzugt von 0,2 bis 10 Gew.-% im Polymer enthalten sein können, sind insbesondere $C_1$-$C_{10}$-Hydroxyalkyl(meth)acrylate, (Meth)acrylamid sowie dessen am Stickstoff mit $C_1$-$C_4$-Alkyl substituierten Derivate, ethylenisch ungesättigte Carbonsäuren, Dicarbonsäuren, deren Halbester und Anhydride, z.B. (Meth)acrylsäure, Maleinsäure, Fumarsäure, Maleinsäureanhydrid, Maleinsäure- und Fumarsäurehalbester und Itaconsäure. Ganz besonders bevorzugt ist ein Gehalt von 0,2 bis 5 Gew.-% einer ethylenisch ungesättigten Carbonsäure.

Die Glasübergangstemperatur des Polymeren liegt unter -25°C, insbesondere zwischen -25°C und -60°C, besonders bevorzugt zwischen -30°C und -50°C.

Die Glasübergangstemperatur des Polymeren läßt sich nach üblichen Methoden wie Differentialthermoanalyse oder Differential Scanning Calorimetrie (s. z.B. ASTM 3418/82, sog. "midpoint temperature") bestimmen.

Das zahlenmittlere Molekulargewicht $M_n$ des Polymeren ist vorzugsweise größer als 10.000, bevorzugt größer als 20.000, besonders bevorzugt größer als 30.000 und das gewichtsmittlere Molekulargewicht $M_w$ ist vorzugsweise größer 250.000 (bestimmt durch Gelpermeationschromatographie mit Polystyrol als Standard an einer Polymerlösung in Tetrahydrofuran nach Sedimentation der unlöslichen Bestandteile); der Anteil der unlöslichen Bestandteile des Polymeren beträgt vorzugsweise 0-90 Gew.-%, besonders bevorzugt 20-70 und ganz besonders bevorzugt 40 bis 60 Gew.-%, bezogen auf das Polymere.

Die Herstellung des Polymeren erfolgt durch radikalische Polymerisation. Geeignete Polymerisationsmethoden, wie Substanz-, Lösungs-, Suspensions- oder Emulsionspolymerisation sind dem Fachmann bekannt.

Vorzugsweise wird das Copolymerisat durch Lösungspolymerisation mit anschließender Dispergierung in Wasser oder besonders bevorzugt durch Emulsionspolymerisation hergestellt, so daß wäßrige Copolymerdispersionen entstehen.

Die Emulsionspolymerisation kann diskontinuierlich, mit oder ohne Verwendung von Saatlatices, unter Vorlage aller oder einzelner Bestandteile des Reaktionsgemisches, oder bevorzugt unter teilweiser Vorlage und Nachdosierung der oder einzelner Bestandteile des Reaktionsgemisches, oder nach dem Dosierverfahren ohne Vorlage durchgeführt werden.

Die Monomeren können bei der Emulsionspolymerisation wie üblich in Gegenwart eines wasserlöslichen Initiators und eines Emulgators bei vorzugsweise 30 bis 95°C polymerisiert werden.

Geeignete Initiatoren sind z.B. Natrium-, Kalium- und Ammoniumpersulfat, tert.-Butylhydroperoxide, wasserlösliche Azoverbindungen oder auch Redoxinitiatoren wie $H_2O_2$/Ascorbinsäure.

Als Emulgatoren dienen z.B. Alkalisalze von längerkettigen Fettsäuren, Alkylsulfate, Alkylsulfonate, alkylierte Arylsulfonate oder alkylierte Biphenylethersulfonate. Des weiteren kommen als Emulgatoren Umsetzungsprodukte von Alkylenoxiden, insbesondere Ethylen- oder Propylenoxid mit Fettalkoholen, -säuren oder Phenol, bzw. Alkylphenolen in Betracht.

Im Falle von wäßrigen Sekundärdispersionen wird das Copolymerisat zunächst durch Lösungspolymerisation in einem organischen Lösungsmittel hergestellt und anschließend unter Zugabe von Salzbildnern, z.B. von Ammoniak zu Carbonsäuregruppen enthaltenden Copolymerisaten, in Wasser ohne Verwendung eines Emulgators oder Dispergierhilfsmittels dispergiert. Das organische Lösungsmittel kann abdestilliert werden. Die Herstellung von wäßrigen Sekundärdispersionen ist dem Fachmann bekannt und z.B. in der DE-A-37 20 860 beschrieben.

Zur Einstellung des Molekulargewichts können bei der Polymerisation Regler eingesetzt werden. Geeignet sind z.B. -SH enthaltende Verbindungen wie Mercaptoethanol, Mercaptopropanol, Thiophenol, Thioglycerin, Thioglykolsäureethylester, Thioglykolsäuremethylester und tert.-Dodecylmercaptan.

Der Feststoffgehalt der erhaltenen Polymerdispersionen beträgt vorzugsweise 40 bis 80, besonders bevorzugt 45 bis 75 Gew.-%. Hohe Polymerfeststoffgehalte können z.B. nach Verfahren, welche in der deutschen Patentanmeldung DE-A-4 307 683 oder der EP 37 923 beschrieben sind, eingestellt werden.

Die verwendete wäßrige Zusammensetzung enthält neben dem Polymeren noch mindestens einen Füllstoff. Als solche in Betracht kommen z.3. feingemahlene oder gefällte Kreiden mit einem mittleren Teilchendurchmesser von im allgemeinen zwischen 2 und 50 µm und/oder Quarzmehl mit einem üblichen mittleren Teilchendurchmesser von 3 bis 50 µm.

Die Zusammensetzung kann weiterhin Netz- oder Dispergiermittel z.B. für die Füllstoffe, Verdicker und auch z.3. noch weitere übliche Zuschlagstoffe wie Entschäumer und Konservierungsstoffe enthalten.

Netz- oder Dispergiermittel können z.B. in Mengen von 0 bis 5 Gew.-%, Verdicker in Mengen von 0 bis 10 Gew.-%, Konservierungsmittel in Mengen von 0 bis 1 Gew.-% und Entschäumer in Mengen von 0 bis 5 Gew.-% in der wäßrigen Zusammensetzung enthalten sein. Die Gewichtsangaben beziehen sich dabei auf die Summe aller Bestandteile der wäßrigen Zusammensetzung, mit Ausnahme von Wasser.

Die Zusammensetzung ist frei von organischen Lösungsmitteln und Weichmachern wie z.B. Butylacetat, Toluol oder Phthalsäureester. Sie enthält daher im wesentlichen keine organischen Verbindungen mit einem Siedepunkt unterhalb 260°C bei Normaldruck (1 bar).

Die Zusammensetzung ist auch frei von üblicherweise zusätzlich eingesetzten klebrigmachenden Harzen, wie Kolophoniumharzen.

Die Herstellung der wäßrigen Zusammensetzung kann in einfacher Weise dadurch erfolgen, daß der bei der Emulsionspolymerisation erhaltenen wäßrigen Polymerdispersion die Füllstoffe und gegebenenfalls weitere Additive unter Rühren zugesetzt werden.

Der wassergehalt der fertigen Zubereitung liegt im allgemeinen bei 7 bis 50, insbesondere 10 bis 30 Gew.-%, bezogen auf die gesamte wäßrige Zubereitung.

Die wäßrige Zubereitung wird als Fußbodenkleber für Bodenbeläge z.B. aus PVC, in Ausführungen als Mehrschichtbeläge oder Homogenbeläge, Schaumstoffbeläge mit Textilunterseite, z.B. Jute, Polyestervlies, Gummibeläge, Textilbeläge mit unterschiedlicher Rückenausstattung, wie Polyurethanschaum, Styrol-Butadien-Schaum, textiler Zweitrücken, Nadelfilzbodenbeläge, Polyolefinbeläge oder Linoleumbeläge, auf Untergründen wie Holz, Estrich, Beton, keramische Fliesen oder Metalluntergründe, verwendet.

Der Kleber wird z.B. mit einer Zahnleiste auf den Untergrund aufgetragen. Nach dem üblichen Ablüften wird der Bodenbelag eingelegt. Arbeitstechnisch ist der erfindungsgemäße Kleber den lösungsmittelhaltigen Kunstharzklebern und den klassischen Dispersionseinseitklebern gleichzusetzen. In der Verarbeitbarkeit ähnelt der neue Kleber lösungsmittelhaltigen Klebern. Die erfindungsgemäße Klebstoffzusammensetzung weist ein gutes Niveau von anwendungstechnischen Eigenschaften wie Schälfestigkeit, Scherfestigkeit, Naßanzugsvermögen und Trockenanfaßvermögen und eine hohe Wärmestandfestigkeit auf.

Die in den folgenden Beispielen angegebenen Teile und Prozente beziehen sich, wenn nichts anderes angegeben, auf das Gewicht.

Beispiele

Teile sind Gewichtsteile

Beispiel 1

In einem Reaktionsgefäß mit Rührer und Zulaufgefäßen werden 240 Teile wasser, 1 Teil Ascorbinsäure und 1,5 Teile einer Saatdispersion (Herstellung siehe Beispiel 5) auf 85°C erhitzt. Nach Zugabe von 2,0 Teilen Natriumpersulfat beginnt man den über 3 Stunden gleichmäßigen Zulauf einer Emulsion aus 219 Teilen Wasser, 16 Teilen des Natriumsalzes eines sulfatierten Umsetzungsproduktes von Laurylalkohol mit 2,5 Mol Ethylenoxid, 1 Teil Ascorbinsäure, 4 Teilen Natriumhydroxid, 2 Teilen t-Dodecylmercaptan, 1660 Teilen Butylacrylat, 280 Teilen Ethylhexylacrylat, 50 Teilen Methacrylsäure und 10 Teilen Hydroxyethylacrylat. Gleichzeitig wird in einem separaten Zulauf eine Lösung von 8 g Natriumpersulfat in 200 g Wasser zugegeben. Anschließend wird der Inhalt des Reaktionsgefäßes noch 1 Stunde bei 85°C gehalten.

Nachbehandlung: Man kühlt auf 60°C und gibt während 1 Stunde gleichzeitig zwei Lösungen zu, die aus 2 Teilen t-Butylhydroperoxid in 18 Teilen Wasser und aus 2 Teilen Natriumdisulfit, 0,1 Teilen Eisen-II-sulfat · 7 $H_2O$, 1,4 Teilen Aceton und 30 Teilen Wasser bestehen.

Anschließend wird der Inhalt des Reaktionsgefäßes noch 1/2 Stunde bei 60°C gehalten. Durch Zugabe von 10 %iger NaOH wird auf pH 7,0 - 7,5 gestellt.

Die Entfernung flüchtiger Verbindungen erfolgt im Vakuum (200 mbar) solange, bis die Summe der flüchtigen organischen Bestandteile kleiner, höchstens gleich 500 ppm sind, wobei man verdampftes Wasser durch neues Wasser ersetzt.

Die Glasübergangstemperatur des Polymeren betrug -43°C.

Beispiel 2

In einem Reaktionsgefäß mit Rührer und Zulaufgefäßen werden 225 Teile Wasser auf 85°C erhitzt. Es werden 12 Teile des Emulsionszulaufs und 30 Teile des Initiatorzulaufs zugegeben. 15 Minuten später beginnt der gleichmäßige Zulauf der Emulsion und der Initiatorlösung, wobei die Emulsion in 2 1/4 h und die Initiatorlösung in 3 h zugegeben wird.

Anschließend wird der Inhalt des Reaktionsgefäßes noch 1 Stunde bei 85°C gehalten.

| Emulsionszulauf: | |
|---|---|
| 302 Teile | Wasser |
| 5,8 Teile | Dowfax® 2A1 (verzweigtes $C_{12}$-Alkyldiphenyletherdisulfonat-Na-salz) |
| 1,2 Teile | Natriumlaurylsulfat |
| 1,3 Teile | t-Dodecylmercaptan |
| 9 Teile | Acrylsäure |
| 221 Teile | VEOVA® 10 (Vinylester einer synthetischen Fettsäure der Kettenlösung $C_{10}$, Neodecansäure) |
| 478 Teile | Butylacrylat |

(fortgesetzt)

| Emulsionszulauf: | |
|---|---|
| 177 Teile | Ethylhexylacrylat |
| 17,7 Teile | Ureidomethacrylat |
| 70,8 Teile | Methylmethacrylat |

| Initiatorlösung: | |
|---|---|
| 150 Teile | Wasser |
| 2,5 Teile | Natriumperoxodisulfat |

Nachbehandlung wie bei Beispiel 1.

Die Glasübergangstemperatur des Polymeren betrug -26°C.

Beispiel 3

In einem Reaktionsgefäß mit Rührer und Zulaufgefäßen werden 240 Teile Wasser, 1 Teil Ascorbinsäure und 1,5 Teile einer Saatdispersion (Herstellung siehe Beispiel 5) auf 85°C erhitzt. Dann werden 20 % der Initiatorlösung zugegeben und danach beginnt man mit der Zugabe der Emulsion und der Initiatorlösung, wobei 6 % der Emulsion in 20 Minuten und der Rest der Emulsion in 3 Stunden zugegeben werden. Der Rest der Initiatorlösung wird gleichmäßig in 3,3 Stunden zugegeben.

Anschließend wird der Inhalt des Reaktionsgefäßes noch 1 Stunde bei 85°C gehalten.

| Emulsionszulauf: | |
|---|---|
| 219 Teile | Wasser |
| 16 Teile | des Na-Salzes eines sulfatierten Umsetzungsproduktes von Laurylalkohol mit 2,5 Mol Ethylenoxid |
| 1 Teil | Ascorbinsäure |
| 4 Teile | Natriumhydroxid |
| 2 Teile | Ethylhexylthioglykolat |
| 1660 Teile | Butylacrylat |
| 280 Teile | Ethylhexylacrylat |
| 60 Teile | Methacrylsäure |

| Initiatorzulauf: | |
|---|---|
| 250 Teile | Wasser |
| 10 Teile | Natriumperoxodisulfat |

Nachbehandlung wie bei Beispiel 1.

Die Glasübergangstemperatur des Polymeren betrug -43°C.

Beispiel 4

Die Durchführung entsprach Beispiel 2., jedoch wurden 13 Teile des Emulsionszulaufs und 25 Teile der Initiatorlösung zugegeben.

| Emulsionszulauf: | |
|---|---|
| 260 Teile | Wasser |
| 7 Teile | des Na-Salzes eines sulfatierten Umsetzungsproduktes von Laurylalkohol mit 2,5 Mol Ethylenoxid |
| 1,5 Teile | Natriumlaurylsulfat |
| 1 Teil | Mercaptopropyltrimethoxysilan |

(fortgesetzt)

| Emulsionszulauf: | |
|---|---|
| 1,5 Teile | t-Dodecylmercaptan |
| 10 Teile | Acrylsäure |
| 133 Teile | Methylmethacrylat |
| 307 Teile | Ethylhexylacrylat |
| 552 Teile | Butylacrylat |

Die Glasübergangstemperatur des Polymeren betrug -32°C.

Beispiel 5

Herstellung wäßriger Polymerisatausgangsdispersion, ausgehend von der Dispersion aus Beispiel 6 als Saatdispersion für Beispiele 1 und 3

| $ADI_1$ : Ein Gemisch aus | |
|---|---|
| 35 kg | Wasser |
| 0,025 kg | Ascorbinsäure |
| 1,00 kg | Dispersion aus Beispiel 6 und |
| 1,55 kg | Zulauf I |

wurde auf 85°C erwärmt und anschließend auf einmal mit 0,825 kg Zulauf II versetzt. Die einsetzende Polymerisation wurde unter Aufrechterhalten der 85°C während 10 min sich selbst überlassen. Im Anschluß daran wurden unter Aufrechterhalten der 85°C die Restmenge des Zulauf I (innerhalb von 3 h) und die Restmenge des Zulauf II (innerhalb von 4 h) dem Polymerisationsgemisch zeitgleich beginnend kontinuierlich zugeführt. Anschließend wurde noch 1 h nachgerührt.

| Zulauf I: | |
|---|---|
| 49 kg | n-Butylacrylat |
| 1 kg | Methacrylsäure |
| 1,79 kg | einer 28 gew.-%igen wäßrigen Lösung des Natriumsalzes des Schwefelsäurehalbesters von ethoxyliertem $C_{12}$-Fettalkohol (EO-Grad: 25) = Emulgatorlösung 1 |
| 0,4 kg | einer 25 gew.-%igen wäßrigen Natriumhydroxidlösung und |
| 25,2 kg | Wasser |

| Zulauf II: | |
|---|---|
| 8 kg | Wasser |
| 0,25 kg | Natriumperoxidisulfat. |

Es wurde eine wäßrige Polymerisatausgangsdispersion $ADI_1$ erhalten, die wie folgt charakterisiert war:

| Feststoffgehalt: | 40,5 Gew.-% |
|---|---|
| $\bar{d}_{W,I1}$ : | 219 nm |

Beispiel 6

Herstellung einer wäßrigen Polymerisatausgangsdispersion Ein Gemisch aus

| 1,44 kg | n-Butylacrylat |
|---|---|
| 16,28 kg | Wasser |
| 1,27 kg | einer 45 gew.-%igen Dowfax 2A1 entsprechenden grenzflächenaktiven Substanz |

(fortgesetzt)

| 0,52 kg | einer 30 gew.-%igen wäßrigen Wasserstoffperoxidlösung |
|---|---|

wurde bei 25°C mit 25 Gew.-% des Zulaufs II auf einmal versetzt. Nachdem sich das Gemisch durch die einsetzende exotherme Polymerisation auf 50°C erwärmt hatte (nach ca. 10 min) wurden unter Aufrechterhalten der 50°C zeitgleich beginnend die Restmenge des Zulauf II (innerhalb von 3 h) und der Zulauf I (innerhalb von 2 h) kontinuierlich zugeführt. Anschließend wurde noch 1 h bei 60°C nachgerührt.

| Zulauf I: | |
|---|---|
| 47,0 kg | Wasser |
| 14,7 kg | n-Butylacrylat |
| 14,7 kg | Methylmethacrylat |
| 0,60 kg | Methacrylsäure |
| 0,664 kg | einer 45 gew.-%igen wäßrigen Lösung der Dowfax 2A1 entsprechenden grenzflächenaktiven Substanz |

| Zulauf II: | |
|---|---|
| 10 kg | Wasser |
| 0,156 kg | Ascorbinsäure |
| 0,004 kg | Eisen(II)-sulfat. |

Es wurde eine wäßrige Polymerisatausgangsdispersion erhalten, die wie folgt charakterisiert war:

| Feststoffgehalt | 30 Gew.-% |
|---|---|
| $\bar{d}_W$ | 40 nm |

$$\left( \frac{d_{90} - d_{10}}{d_{50}} \right) \quad : 0,549$$

Anwendungsbeispiele 1A bis 4A und Vergleichsbeispiel

Beispiel 1A

In 696 Gew.-Teilen der 71,8 %igen Polymerdispersion aus Beispiel 1 werden 500 Gew.-Teile Kreide (®Ulmer weiß x M) eingearbeitet, indem die Kreide portionsweise unter Rühren der vorgelegten Dispersion zugegeben wird. Nach 24 Stunden Reifezeit des Klebers wird das Naßanzugs- und Trockenanzugsvermögen bestimmt (siehe Anlage: Prüfmethode). Die Ergebnisse sind in Tabelle 1 zusammengestellt.

Beispiel 2A

In 923 Gew.-Teilen der 54,2 %igen Polymerdispersion aus Beispiel 2 wurden 500 Gew.-Teile Kreide eingearbeitet. Die Prüfergebnisse sind in Tabelle 1 zusammengestellt.

Beispiel 3A

In 700 Gew.-Teilen der 71,4 %igen Polymerdispersion aus Beispiel 3 werden 500 g Kreide eingerührt. Prüfergebnisse siehe Tabelle 1.

Beispiel 4A

In 792 Gew.-Teilen der 63,1 %igen Polymerdispersion aus Beispiel 4 wurden, nachdem die Dispersion mit 10 %iger Natronlauge auf pH 8 gestellt wurde, 500 g Kreide eingearbeitet. Prüfergebnisse siehe Tabelle 1.

Tabelle 1:

| Naß- und Trockenanzugsvermögen der Fußbodenkleber | | 1A | 2A | 3A | 4A |
|---|---|---|---|---|---|
| Naßanzugsvermögen [N/5 cm] | | | | | |
| nach | 10 min | 18 | 4 | 10 | 4 |
| | 20 min | 45 | 16 | 32 | 23 |
| | 30 min | 55 | 42 | 50 | 40 |
| Trockenanzugsvermögen [N/5 cm] | | | | | |
| nach | 10 min | 5 | 1 | 4 | 2 |
| | 20 min | 35 | 3 | 45 | 27 |
| | 30 min | 45 | 33 | 60 | 37 |
| | 45 min | 45 | 28 | 48 | 25 |

Vergleichsbeispiel

Zum Vergleich wurde auch ein herkömmlicher Bodenbelagklebstoff mit folgender Zusammensetzung geprüft:

| | |
|---|---|
| 35,0 Teile | Acronal® V 302; pH-Wert = 7,5, einem Polymeren auf Basis von Acrylsäureestern mit einer Tg von -20°C |
| 0,5 Teile | Emulphor® OPS 25, einem Emulgator |
| 0,2 Teile | Lumiten® EL, einem Entschäumer |
| 8,5 Teile | Latekoll® D 2 %ig, einem Verdicker |
| 2,0 Teile | Plastilit® 3431, einem Weichmacher (Monophenylglykolether) |
| 20,0 Teile | Harzschmelze (80 Teile Kolophoniumharz und 20 Teile Plastilit 3431) |
| 33,8 Teile | Calzit (Calziumcarbonat) |

| Ergebnisse: | | |
|---|---|---|
| Naßanzugsvermögen [N/5 cm] | | |
| nach | 10 min | 3 |
| | 20 min | 12 |
| | 30 min | 28 |
| Trockenanzugsvermögen [N/5 cm] | | |
| nach | 10 min | 18 |
| | 30 min | 30 |
| | 45 min | 34 |

Beschreibung der Prüfmethoden

- Naßanzugsvermögen
  Der Klebstoff wird mit einem DIN-Rakel auf eine Zementfaserplatte (z.B. Eternit® 2000) (20 x 50 cm) in Abzugsrichtung aufgetragen. Auftragsmenge ca. 350 - 400 g/m$^2$. Nadelfilzbeläge (NBB Streifen) werden nach 10 Minuten Ablüften in das Kleberbett eingelegt und mit einer 2,5 kg Walze durch 3 mal Hin- und Herrollen angepreßt. In den angegebenen Zeitabständen werden die Beläge mit einem Abzugsgerät abgezogen und dabei die Zunahme des Abschälwiderstandes in N/5 cm bestimmt.

- Trockenanzugsvermögen

Der Klebstoff wird mit DIN-Rakel auf eine Zementfaserplatte (z.B. Eternit® 2000) (20 x 50 cm) in Abzugsrichtung aufgetragen. Auftragsmenge ca. 250 - 300 mg/m$^2$. PVC Streifen (Pegulan® B 1) werden nach unterschiedlicher Ablüftzeit in das Kleberbett eingelegt und mit einer 2,5 kg Walze durch Hin- und Herrollen (3 x) angepreßt. Anschließend werden die Streifen mit einem Abzugsgerät abgezogen und der Abschälwiderstand in N/5 cm bestimmt.

## Patentansprüche

1. Verwendung einer wäßrigen Zusammensetzung, frei von organischen Lösungsmitteln, Weichmachern und zusätzlichen klebrigmachenden Harzen, enthaltend Wasser

| und 20 - 99 Gew.-% | eines Polymeren mit einer Glasübergangstemperatur unter -25°C, wobei das Polymer zu 60 bis 100 Gew.-% aus $C_1$-$C_{20}$-Alkyl(meth)acrylaten, oder Mischungen dieser Monomeren aufgebaut ist, und |
|---|---|
| 1 - 80 Gew.-% | eines Füllstoffs, |

wobei sich die Gewichtsprozente auf die Summe der Bestandteile der wäßrigen Zusammensetzung mit Ausnahme von Wasser beziehen, als Fußbodenkleber, wobei der Fußbodenkleber einseitig auf den Untergrund aufgetragen wird.

2. Verwendung gemäß Anspruch 1, wobei das Polymere in Form einer 45 bis 75 gew.-%igen wäßrigen Dispersion vorliegt.

3. Verwendung gemäß Anspruch 1 oder 2, wobei die Glasübergangstemperatur des Polymeren unterhalb von -30°C liegt.

4. Verwendung gemäß einem der Ansprüche 1 bis 3, wobei das zahlenmittlere Molekulargewicht $M_n$ der Polymeren größer 20.000 ist.

5. Verwendung gemäß einem der Ansprüche 1 bis 4, wobei der Gehalt des Füllstoffs 40 bis 80 Gew.-% beträgt.

## Claims

1. The use of an aqueous composition, free of organic solvents, plasticizers and additional tackifiers, containing water

| and 20 - 99 % | by weight of a polymer having a glass transition temperature below -25°C, the polymer being composed of from 60 to 100 % by weight of $C_1$-$C_{20}$-alkyl (meth)acrylates, or mixtures of these monomers, and |
|---|---|
| 1 - 80 % | by weight of a filler, |

the percentages by weight being based on the sum of the components of the aqueous composition, with the exception of water, as a floor adhesive, the floor adhesive being applied to the substrate on one side.

2. The use as claimed in claim 1, wherein the polymer is in the form of a 45 - 75 % strength by weight aqueous emulsion.

3. The use as claimed in claim 1 or 2, wherein the glass transition temperature of the polymer is below -30°C.

4. The use as claimed in any of claims 1 to 3, wherein the number average molecular weight $M_n$ of the polymer is greater than 20,000.

5. The use as claimed in any of claims 1 to 4, wherein the content of the filler is from 40 to 80 % by weight.

**Revendications**

1. Utilisation d'une composition aqueuse exempte de solvants organiques, de plastifiants et de résines additionnelles donnant du collant, contenant de l'eau et

| de 20 à 99 % en poids | d'un polymère ayant une température de transition vitreuse inférieure à -25°C, le polymère étant constitué, à raison de 60 à 100 % en poids, de (méth)acrylates d'alkyle en $C_1$-$C_{20}$, ou de mélanges de ces monomères, et |
|---|---|
| de 1 à 80 % en poids | d'une charge, |

où les pourcentages sont rapportés à la somme des constituants de la composition aqueuse à l'exception de l'eau, en tant qu'adhésif pour revêtement de sol, l'adhésif pour revêtement de sol étant appliqué sur une face du support.

2. Utilisation selon la revendication 1, dans laquelle le polymère se présente sous forme d'une dispersion aqueuse à 45-75 % en poids.

3. Utilisation selon la revendication 1 ou 2, dans laquelle la température de transition vitreuse du polymère est inférieure à -30°C.

4. Utilisation selon l'une des revendications 1 à 3, dans laquelle la masse moléculaire moyenne en nombre $M_n$ du polymère est supérieure à 20 000.

5. Utilisation selon l'une des revendications 1 à 4, dans laquelle la teneur en charge est de 40 à 80 % en poids.